# EUROPEAN PATENT SPECIFICATION

(11) **EP 3 193 532 B1**
(45) Date of publication and mention of the grant of the patent: **19.09.2018**
(21) Application number: 14903406.8
(22) Date of filing: 30.09.2014
(51) Int. Cl.: H04W 36/14, H04W 36/30, H04W 88/06, H04W 76/28

(54) **HETEROGENEOUS SYSTEM MEASUREMENT METHOD, AND RELATED APPARATUS AND SYSTEM**
HETEROGENES SYSTEMMESSVERFAHREN UND ZUGEHÖRIGE VORRICHTUNG UND SYSTEM
PROCÉDÉ DE MESURE DE SYSTÈME HÉTÉROGÈNE, ET APPAREIL ET SYSTÈME ASSOCIÉS

(43) Date of publication of application: 19.07.2017
(73) Proprietor: Huawei Technologies Co., Ltd., Longgang District Shenzhen, Guangdong 518129 (CN)
(72) Inventor: WU, Xiaobo, Shenzhen Guangdong 518129 (CN); LV, Yangming, Shenzhen Guangdong 518129 (CN)
(74) Representative: Maiwald Patent- und Rechtsanwaltsgesellschaft mbH
(86) International application number: PCT/CN2014/087977
(87) International publication number: WO 2016/049868

(56) References cited:
- WO-A1-2014/101139
- CN-A- 102 308 629
- CN-A- 103 634 830
- CN-A- 103 702 378
- US-A1- 2014 179 318
- US-A1- 2014 198 699
- "Speech and multimedia Transmission Quality (STQ); QoS of connections from current technologies to LTE for delay sensitive applications;ETSI TR 103 122", ETSI DRAFT; ETSI TR 103 122, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. STQ - STQ-MOBILE, no. V1.1.1, 23 July 2014 (2014-07-23), pages 1-44, XP014193202, [retrieved on 2014-07-23]

## Description

### TECHNICAL FIELD

The present invention relates to the field of communications technologies, and in particular, to an inter-RAT measurement method, and a related apparatus and system.

### BACKGROUND

WO 2014/101139 A1 discloses a CSFB handover method and apparatus, and a system, and belongs to the communications field. The method includes: receiving, by an eNB, a CSFB indication; sending, by the base station after receiving the CSFB indication, a measurement control message to user equipment, where the measurement control message is used to instruct the user equipment to measure cell signal quality and send a corresponding event measurement report; and according to a receiving status of the event measurement report sent by the user equipment, selecting, by the base station, to complete CSFB handover by using blind handover, or selecting to complete CSFB handover by using measurement-based handover. The apparatus includes a first receiving module, a sending module, a second receiving module, and a handover module. According to a receiving status of an event measurement report sent by user equipment, blind handover is selected or measurement-based handover is selected to complete CSFB handover, thereby increasing a CSFB handover success probability.

A second generation (Second Generation, 2G) or third generation (Third Generation, 3G) network such as a Global System for Mobile Communications (GSM) network or a Wideband Code Division Multiple Access (Wideband Code Division Multiple Access, WCDMA) network has basically achieved full coverage.

With the development of a Long Term Evolution (Long Term Evolution, LTE) network technology, LTE networks have covered some urban areas and traffic hotspot areas. In this way, in a current communications network, an LTE network coexists with a2G/3G network. Because the LTE networks are in a construction stage, some LTE networks may support only a data service but not support a voice service. When user equipment (User Equipment, UE) located in such an LTE network initiates a voice service, the UE needs to fall back to a 2G/3G network having a circuit switched (Circuit Switched, CS) domain and then perform the voice service in the 2G/3G network having the CS domain. The foregoing technology, a handover from a CS domain of the LTE network to the CS domain of the 2G/3G network, is referred to as a circuit switched fallback (Circuit Switched Fallback, CSFB) technology. Some LTE networks may support a voice service, and therefore UE may use a voice over LTE (Voice over LTE, VoLTE) service. However, because the LTE networks have not achieved full coverage, if UE that is using the VoLTE is located in a boundary area between an LTE network and a 2G/3G network or is about to enter an area covered only by a 2G/3G network, usually, a handover from the VoLTE to a CS domain of the 2G/3G network needs to be performed, so as to avoid voice interruption.

Before the foregoing handover from the LTE network to the CS domain of the 2G/3G network is executed, usually, signal quality of the 2G/3G network needs to be measured in the LTE network, that is, inter-RAT measurement is executed, so that the LTE network selects a 2G/3G cell that meets a signal quality requirement. Currently, the inter-RAT measurement is usually performed in a gap (gap, GAP) mode. When the inter-RAT measurement is performed in the GAP mode, measurement of 6 ms is usually performed in a cycle of 40 ms/80 ms. Although this measurement manner may avoid impact on a service, when there are multiple 2G/3G neighboring cells, in particular, multiple 2G neighboring cells, a relatively long time needs to be consumed to complete the inter-RAT measurement. Consequently, a call handover preparation time is excessively long. This causes voice session interruption in a CSFB call process or voice session interruption during a VoLTE service.

### SUMMARY

To resolve the foregoing problem in the prior art, embodiments of the present invention provide an inter-RAT measurement method, and a related apparatus and system, so as to reduce a measurement time and accelerate inter-RAT measurement, thereby reducing a call handover preparation time and avoiding voice session interruption.

According to a first aspect, there is provided an inter-RAT measurement method as defined in appended claim 1. According to a second aspect, there is provided an evolved NodeB as defined in appended claim 9.

The embodiments and/or examples of the following description which are not covered by the appended claims are considered as not being part of the present invention. According to a first example, an embodiment proposes an inter-RAT measurement method, where the method includes:
in a process of performing a circuit switched fallback CSFB on user equipment UE located in a Long Term Evolution LTE network or in a process of providing a voice over Long Term Evolution VoLTE service for the UE, determining, by an evolved NodeB eNodeB, that the UE supports a handover from the LTE network to a circuit switched CS domain of a 2G or 3G network; and
sending, by the eNodeB, a measurement control message to the UE, where the measurement control message includes a first connected-discontinuous reception C-DRX parameter and a measurement configuration parameter, and the first C-DRX parameter and the measurement configuration parameter are used to instruct the UE to measure signal quality of the 2G or 3G network in a dormant period of a first C-DRX cycle.

With reference to the first example, in a first possible implementation manner of the first example, the first C-DRX cycle is determined by the first C-DRX parameter, and duration of the dormant period of the first C-DRX cycle is not less than 51 ms; or duration of the dormant period of the first C-DRX cycle is not less than 100 ms; or duration of the dormant period of the first C-DRX cycle is not less than 80 ms; or a ratio of duration of the dormant period of the first C-DRX cycle to duration of the first C-DRX cycle is greater than 0.6; or a ratio of duration of the dormant period of the first C-DRX cycle to duration of the first C-DRX cycle is greater than 0.8; or a ratio of duration of the dormant period of the first C-DRX cycle to duration of the first C-DRX cycle is greater than 0.9.

With reference to the first example or the first possible implementation manner of the first example, in a second possible implementation manner, before the sending, by the eNodeB, a measurement control message to the UE, the method further includes: sending, by the eNodeB, a second C-DRX parameter to the UE.

With reference to the first example, or the first possible implementation manner or the second possible implementation manner of the first example, in a third possible implementation manner, the duration of the dormant period of the first C-DRX cycle is greater than duration of a dormant period of a second C-DRX cycle; or the ratio of the duration of the dormant period of the first C-DRX cycle to the duration of the first C-DRX cycle is greater than a ratio of duration of a dormant period of a second C-DRX cycle to duration of the second C-DRX cycle; and the first C-DRX cycle is determined by the first C-DRX, and the second C-DRX cycle is determined by the second C-DRX parameter.

According to a second example, an embodiment provides an inter-RAT measurement method, where the method includes: in a process in which an evolved NodeB eNodeB performs a circuit switched fallback CSFB on user equipment UE located in a Long Term Evolution LTE network or in a process in which the eNodeB provides a voice over Long Term Evolution VoLTE service for the UE, receiving, by the UE, a measurement control message sent by the eNodeB, where the measurement control message includes a first connected-discontinuous reception C-DRX parameter and a measurement configuration parameter, and the first C-DRX parameter and the measurement configuration parameter are used to instruct the UE to measure signal quality of a 2G or 3G network in a dormant period of a first C-DRX cycle; and
measuring, by the UE, the signal quality of the 2G or 3G network in the dormant period of the first C-DRX cycle.

With reference to the second example, in a first possible implementation manner of the second example, the first C-DRX cycle is determined by the first C-DRX parameter, and duration of the dormant period of the first C-DRX cycle is not less than 51 ms; or duration of the dormant period of the first C-DRX cycle is not less than 100 ms; or duration of the dormant period of the first C-DRX cycle is not less than 80 ms; or a ratio of duration of the dormant period of the first C-DRX cycle to duration of the first C-DRX cycle is greater than 0.6; or a ratio of duration of the dormant period of the first C-DRX cycle to duration of the first C-DRX cycle is greater than 0.8; or a ratio of duration of the dormant period of the first C-DRX cycle to duration of the first C-DRX cycle is greater than 0.9.

With reference to the second example or the first possible implementation manner of the second example, in a second possible implementation manner, before the receiving, by the UE, a measurement control message sent by the eNodeB, the method further includes: receiving, by the UE, a second C-DRX parameter sent by the eNodeB.

With reference to the second example, or the first possible implementation manner or the second possible implementation manner of the second example, in a third possible implementation manner, the duration of the dormant period of the first C-DRX cycle is greater than duration of a dormant period of a second C-DRX cycle; or the ratio of the duration of the dormant period of the first C-DRX cycle to the duration of the first C-DRX cycle is greater than a ratio of duration of a dormant period of a second C-DRX cycle to duration of the second C-DRX cycle; and the first C-DRX cycle is determined by the first C-DRX, and the second C-DRX cycle is determined by the second C-DRX parameter.

According to a third example, an embodiment proposes an evolved NodeB, including:
a determining unit, configured to: in a process in which the evolved NodeB performs a circuit switched fallback CSFB on user equipment UE located in a Long Term Evolution LTE network or in a process in which the evolved NodeB provides a voice over Long Term Evolution VoLTE service for the UE, determine that the UE supports a handover from the LTE network to a circuit switched CS domain of a 2G or 3G network; and
an interaction unit, configured to send a measurement control message to the UE, where the measurement control message includes a first connected-discontinuous reception C-DRX parameter and a measurement configuration parameter, and the first C-DRX parameter and the measurement configuration parameter are used to instruct the UE to measure signal quality of the 2G or 3G network in a dormant period of a first C-DRX cycle.

According to a fourth example, an embodiment proposes user equipment, including an interaction unit, configured to: in a process in which an evolved NodeB eNodeB performs a circuit switched fallback CSFB on the user equipment or in a process in which the eNodeB provides a voice over Long Term Evolution VoLTE service for the user equipment, receive a measurement control message sent by the eNodeB, where the measurement control message includes a first connected-discontinuous reception C-DRX parameter and a measurement configuration parameter, and the first C-DRX parameter and the measurement configuration parameter are used to instruct the user equipment to measure signal quality of a 2G or 3G network in a dormant period of a first C-DRX cycle; and
a processing unit, configured to measure the signal quality of the 2G or 3G network in the dormant period of the first C-DRX cycle.

According to a fifth example, an embodiment proposes a measurement system, including the evolved NodeB according to the third example and the user equipment according to the fourth example.

The embodiments provide an inter-RAT measurement method, and a related apparatus and system. An evolved NodeB eNodeB may send a measurement control message to UE when determining that the UE supports a handover from an LTE network to a CS domain of a 2G or 3G network, where the measurement control message carries a first connected-discontinuous reception (Connected-Discontinuous Reception, C-DRX) parameter and a measurement control parameter, and the first C-DRX parameter and the measurement control parameter are used to instruct
the UE to measure signal quality of the 2G or 3G network in a dormant period of a first C-DRX cycle. In this way, the UE can continually measure the signal quality of the 2G or 3G network in the dormant period of the first C-DRX cycle, so as to avoid performing measurement of only 6 ms in a cycle of 40 ms/80 ms, that is, avoid performing the measurement in a GAP mode, accelerate a measurement process, and shorten a measurement time, thereby effectively reducing a call handover preparation time and avoiding voice session interruption in a CSFB call process or voice session interruption during a VoLTE service.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person skilled in the art may still derive other drawings from these accompanying drawings without creative efforts.
FIG. 1 is a flowchart of an inter-RAT measurement method according to an embodiment of the present invention;
FIG. 2 is a flowchart of another inter-RAT measurement method according to an embodiment of the present invention;
FIG. 3A and FIG. 3B are a flowchart of another inter-RAT measurement method according to an embodiment of the present invention;
FIG. 4 is a schematic diagram of an evolved NodeB according to an embodiment of the present invention;
FIG. 5 is a schematic diagram of user equipment according to an embodiment of the present invention;
FIG. 6 is a schematic diagram of structural composition of an inter-RAT measurement apparatus according to an embodiment of the present invention; and
FIG. 7 is a schematic diagram of a measurement system according to an embodiment of the present invention.

### DESCRIPTION OF EMBODIMENTS

Embodiments of the present invention provide an inter-RAT measurement method, and a related apparatus and system, so as to accelerate inter-RAT measurement and reduce a measurement time, thereby reducing a call handover preparation time and avoiding voice session interruption. The embodiments of the present invention further provide a corresponding device and system.

In the embodiments of the present invention, "first", "second", "third", "fourth", "fifth", and the like are only used for distinguishing different indication information, messages, or other objects, rather than representing a sequence relationship.

For describing the embodiments of the present invention more clearly, some knowledge related to the embodiments of the present invention is first described.

About C-DRX: In a communications network, a data stream based on a packet is generally unexpected. When there is no data transmission, power consumption may be reduced by disabling a receiver circuit of UE, so as to improve battery life. This is an origin of the connected-discontinuous reception (Connected-Discontinuous Reception, C-DRX). A basic mechanism of the C-DRX is to configure a C-DRX cycle (Connected-Discontinuous Reception Cycle) for UE in an RRC_CONNECTED state. The C-DRX cycle includes "On Duration" and "Opportunity for DRX". During a time of "On duration" (that is, during an activation period), the UE is allowed to listen to and receive data of a physical downlink control channel (Physical Downlink Control Channel, PDCCH). During a time of "Opportunity for DRX" (that is, during a dormant period), the UE does not receive the data of the physical downlink control channel, so as to reduce power consumption. About VoLTE: An existing 2G/3G core network includes a PS domain and a CS domain, and a voice service and another CS supplementary service are supported by the CS domain. An LTE core network includes no CS domain but only the PS domain, and therefore is referred to as an evolved packet system (Evolved Packet System, EPS). To provide a voice service, the LTE network needs to include an IP multimedia subsystem (IP Multimedia Subsystem, IMS), and the IMS is at a session control layer. Therefore, the voice service in the LTE/EPS system is referred to as a VoLTE service or an IMS voice over IP (voice over IP, VoIP) service.

Inter-RAT measurement means that UE located in a network system measures signal quality of another network system, for example, UE located in an LTE network measures signal quality of a 2G/3G network. The inter-RAT measurement is usually performed before a network handover. In the prior art, the UE usually performs the inter-RAT measurement in a GAP mode, that is, measurement of 6 ms is performed in each cycle of 40 ms/80 ms, so as to avoid impact on a service. However, for multiple 2G/3G neighboring cells, in particular, for multiple 2G neighboring cells, the inter-RAT measurement needs a relatively long measurement time. In the measurement manner in the prior art, multiple cycles of 40 ms/80 ms may need to be consumed to complete the inter-RAT measurement. Consequently, a call handover preparation time is excessively long. This causes voice session interruption in a CSFB call process or voice session interruption during a VoLTE service performed by the UE.

The embodiments of the present invention propose an inter-RAT measurement method, and a related apparatus and system. A measurement control message that is sent by an evolved NodeB (evolved NodeB, eNodeB) to UE located in an LTE network may include a C-DRX parameter and a measurement control parameter. The C-DRX parameter and the measurement control parameter may instruct the UE to continuously measure signal quality of a 2G/3G network in a dormant period of a C-DRX cycle, for example, the C-DRX cycle may be determined by the C-DRX parameter. The C-DRX parameter may be configured in the following manner: In an entire C-DRX cycle, a time length of an activation period is as short as possible when the time length is greater than zero, and a time length of a dormant period is as long as possible when the time length is less than duration of the C-DRX cycle, so that the UE may stay in the dormant period of the C-DRX cycle for a relatively long time to continuously measure the signal quality of the 2G/3G network. In the foregoing manner, the measurement of the signal quality of the 2G/3G network performed by the UE located in the LTE network is effectively accelerated, a measurement time is shortened, and a problem of an excessively long call handover preparation time or voice session interruption caused by inter-RAT measurement performed in a GAP mode in the prior art is resolved.

The following clearly and completely describes the technical solutions in the embodiments of the present invention with reference to the accompanying drawings in the embodiments of the present invention.

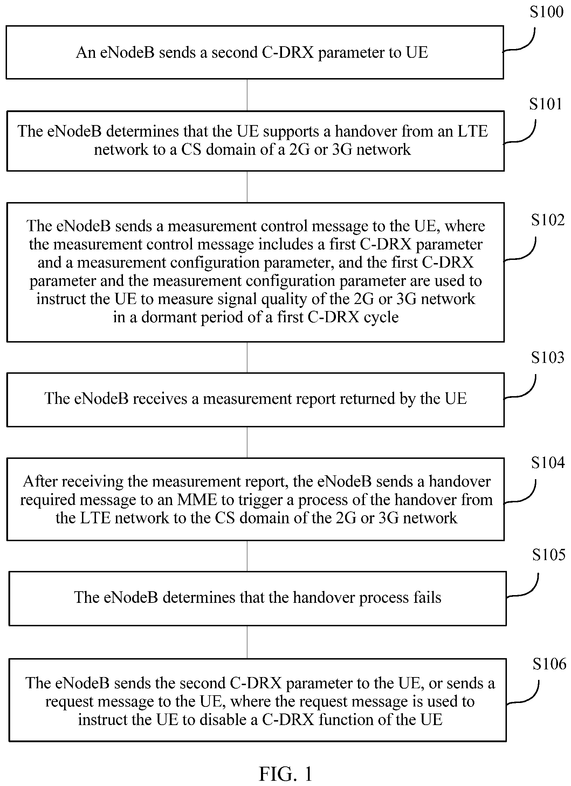

Referring to FIG. 1, FIG. 1 is an inter-RAT measurement method according to an embodiment of the present invention. The method includes the following steps.

S101. An eNodeB determines that a UE supports a handover from an LTE network to a CS domain of a 2G or 3G network.

The eNodeB may first determine whether the UE supports the handover from the LTE network to the CS domain of the 2G or 3G network. If the UE supports the handover from the LTE network to the CS domain of the 2G or 3G network, signal quality of the 2G or 3G network needs to be measured before the handover.

For example, in a process of performing a circuit switched fallback CSFB on the UE located in the LTE network, before the UE is handed over from the LTE network to the CS domain of the 2G or 3G network, the eNodeB may determine whether the UE supports the handover from the LTE network to the CS domain of the 2G or 3G network; or in a process of providing a VoLTE service for the UE, before the UE is handed over from the LTE network to the CS domain of the 2G or 3G network, the eNodeB may determine whether the UE supports the handover from the LTE network to the CS domain of the 2G or 3G network.

S102. The eNodeB sends a measurement control message to the UE, where the measurement control message includes a first C-DRX parameter and a measurement configuration parameter, and the first C-DRX parameter and the measurement configuration parameter are used to instruct the UE to measure signal quality of the 2G or 3G network in a dormant period of a first C-DRX cycle.

The measurement control message may be a radio resource control connection reconfiguration (RRC Connection Reconfiguration) message. Because the measurement control message includes the first C-DRX parameter and the measurement configuration parameter, the UE may continuously measure the signal quality of the 2G or 3G network in the dormant period of the first C-DRX cycle according to the first C-DRX parameter and an instruction of the measurement configuration parameter.

Specifically, the measurement configuration parameter may include related information that is required to measure the signal quality of the 2G or 3G network. For example, the measurement configuration parameter may include an object, a cell list, a report manner, a measurement identifier, an event parameter, or the like that the UE needs to measure. The first C-DRX cycle may be determined by the first C-DRX parameter, and the first C-DRX cycle may include the dormant period and an activation period. In the dormant period of the first C-DRX cycle, the UE does not receive data of a physical downlink control channel. In the activation period of the first C-DRX cycle, the UE listens to and receives the data of the physical downlink control channel. When the measurement control message includes the measurement configuration parameter and the first C-DRX parameter, the measurement control message may be used to instruct the UE to measure the signal quality of the 2G or 3G network in the dormant period of the first C-DRX cycle, that is, the measurement configuration parameter and the first C-DRX parameter are used to instruct the UE to measure the signal quality of the 2G or 3G network in the dormant period of the first C-DRX cycle. In the foregoing manner, the UE may continuously measure the signal quality of the 2G or 3G network in the dormant period of the entire first C-DRX cycle, so as to avoid performing measurement of only 6 ms in a cycle of 40 ms/80 ms, that is, avoid performing the measurement in a GAP mode, accelerate a measurement process, and shorten a measurement time, thereby effectively reducing a call handover preparation time and avoiding voice session interruption in a CSFB call process or voice session interruption during a VoLTE service.

Optionally, the first C-DRX parameter and the measurement configuration parameter may be further used to instruct the UE to measure the signal quality of the 2G or 3G network in the GAP mode in the activation period of the first C-DRX cycle.

Further, the first C-DRX cycle may be determined by the first C-DRX parameter. Therefore, a time in which the UE continuously performs inter-RAT measurement may be adjusted by adjusting the first C-DRX parameter. Specifically, the first C-DRX parameter may be configured in the following manner: In the entire first C-DRX cycle, duration of the activation period (that is, a time length of the activation period) is as short as possible when the duration is greater than zero, and duration of the dormant period (that is, a time length of the dormant period) is as long as possible when the duration is less than duration of the first C-DRX cycle, so that the UE may stay in the dormant period of the first C-DRX cycle for a relatively long time to continuously measure the signal quality of the 2G/3G network in the dormant period of the first C-DRX cycle, so as to greatly accelerate the inter-RAT measurement.

For example, the duration T₁ₛ of the dormant period of the first C-DRX cycle may be not less than 51 ms. Optionally, T₁ₛ may be greater than or equal to 80 ms or may be greater than or equal to 100 ms, so that the UE may complete the inter-RAT measurement in one dormant period. For another example, a ratio of the duration T₁ₛ of the dormant period of the first C-DRX cycle to the duration T_{1d} of the first C-DRX cycle is greater than 0.6 (that is, T₁ₛ/T_{1d} > 60%). Optionally, T₁ₛ/T_{1d} is greater than 0.8 or is greater than 0.9, so as to ensure that the duration of the dormant period is as long as possible when the duration is less than the duration of the cycle, so that the UE can effectively use the C-DRX cycle to perform the measurement, thereby accelerating the inter-RAT measurement.

Optionally, before step S102, the method may further include step S100.

S100. The eNodeB sends a second C-DRX parameter to the UE.

To reduce power consumption or for another objective, the eNodeB sends the second C-DRX parameter to the UE, and the C-DRX parameter is used to configure a second C-DRX cycle for the UE. The second C-DRX cycle may include a dormant period and activation period. In the dormant period of the second C-DRX cycle, the UE does not receive the data of the physical downlink control channel, so as to reduce the power consumption. The second C-DRX cycle may be determined by the second C-DRX parameter.

Optionally, for preventing a normal service performed by the UE from being affected, the sent second C-DRX parameter may be configured as follows: Duration of the dormant period of the second C-DRX cycle is relatively short, or a ratio of duration of the dormant period of the second C-DRX cycle to duration of the second C-DRX cycle is relatively small. For example, the duration of the second C-DRX cycle may be set to 160 ms, and the duration of the dormant period may be set to 50 ms. Therefore, the first C-DRX parameter may be configured as follows: In a same time, a time in which the UE stays in the dormant period of the first C-DRX cycle is longer than a time in which the UE stays in the dormant period of the second C-DRX cycle, so that a time in which the UE can continuously perform the inter-RAT measurement is increased, a time consumed by the inter-RAT measurement is reduced, and the inter-RAT measurement is accelerated. For example, the duration of the dormant period of the first C-DRX cycle may be greater than the duration of the dormant period of the second C-DRX cycle; or the ratio of the duration of the dormant period of the first C-DRX cycle to the duration of the first C-DRX cycle may be greater than the ratio of the duration of the dormant period of the second C-DRX cycle to the duration of the second C-DRX cycle.

Further, the method may further include the following steps.

S103. The eNodeB receives a measurement report returned by the UE.

The measurement report may include a measurement result obtained by measuring the signal quality of the 2G or 3G network by the UE.

Optionally, the eNodeB may determine, according to the measurement report, to execute the handover from the LTE network to the CS domain of the 2G or 3G network. Step S104 is performed.

S104. After receiving the measurement report, the eNodeB sends a handover required (Handover Required) message to a mobility management entity (Mobile Managenment Entity, MME) to trigger a process of the handover from the LTE network to the CS domain of the 2G or 3G network. However, if the foregoing handover process fails, the UE is still in a C-DRX status, and may stay in the dormant period of the first C-DRX cycle for a relatively long time. This affects the normal service. To resolve this problem, the method may further include the following steps.

S105. The eNodeB determines that the handover process fails.

S106. The eNodeB sends the second C-DRX parameter to the UE, or sends a request message to the UE, where the request message is used to instruct the UE to disable a C-DRX function of the UE.

When determining that the handover process fails, the eNodeB may enable, by sending the second C-DRX parameter to the UE, the UE to restore to a C-DRX status before the inter-RAT measurement is performed, so as to ensure that the UE performs the normal service while the power consumption is reduced. Alternatively, the eNodeB may send the request message instructing the UE to disable the C-DRX function of the UE to the UE, so as to disable the C-DRX function of the UE, and avoid impact on a service.

In addition, if in S103, the eNodeB receives the measurement report returned by the UE and determines, according to the measurement report, not to execute the handover from the LTE network to the CS domain of the 2G or 3G network, the eNodeB may send the second C-DRX parameter to the UE or send the request message to the UE, where the request message is used to instruct the UE to disable the C-DRX function of the UE.

In this embodiment, for interaction between the eNodeB and the UE and detailed descriptions of the foregoing processing steps of the eNodeB, refer to another method embodiment below.

An embodiment of the present invention provides an inter-RAT measurement method, where the method includes the following steps.

S201. UE located in an LTE network receives a measurement control message sent by an eNodeB, where the measurement control message carries a first C-DRX parameter and a measurement configuration parameter, and the first C-DRX parameter and the measurement configuration parameter are used to instruct the UE to measure signal quality of a 2G or 3G network in a dormant period of a first C-DRX cycle.

For example, in a process in which the evolved NodeB eNodeB performs a CSFB on the UE located in the LTE network or in a process in which the eNodeB provides a VoLTE service for the UE, the UE receives the measurement control message sent by the eNodeB. The measurement control message may be a radio resource control connection reconfiguration (RRC Connection Reconfiguration) message.

Optionally, before step S201, the UE may receive a second C-DRX parameter sent by the eNodeB, and the second C-DRX parameter is used by the UE to determine a second C-DRX cycle, that is, the UE may be configured with the second C-DRX cycle. The UE may not receive data of a physical downlink control channel in a dormant period of the second C-DRX cycle, so as to reduce power consumption and improve battery life of the UE.

For specific information about the first C-DRX parameter and specific information about the measurement configuration parameter, refer to another method embodiment, and details are not described in this embodiment of the present invention.

S202. The UE measures the signal quality of the 2G or 3G network in the dormant period of the first C-DRX cycle.

The measurement performed on the signal quality of the 2G or 3G network may be measurement performed on reference signal received power (RSRP) or reference signal received quality (RSRQ) of the 2G or 3G network.

Because the measurement control message includes the first C-DRX parameter and the measurement control parameter, the UE may continuously measure the signal quality of the 2G or 3G network in the dormant period of the first C-DRX cycle according to the first C-DRX parameter and an instruction of the measurement configuration parameter or according to an instruction of the measurement control message, so as to avoid performing the measurement in a GAP mode, accelerate a measurement process, and shorten a measurement time. Further, the first C-DRX cycle may be determined by the first C-DRX parameter, and the first C-DRX parameter may be configured in the following manner: In the entire first C-DRX cycle, duration of an activation period (that is, a time length of the activation period) is as short as possible when the duration is greater than zero, and duration of the dormant period (that is, a time length of the dormant period) is as long as possible when the duration is less than duration of the first C-DRX cycle, so that the UE stays in the dormant period of the first C-DRX cycle for a relatively long time to continuously measure the signal quality of the 2G/3G network in the dormant period of the entire first C-DRX cycle, so as to greatly accelerate the inter-RAT measurement.

Optionally, when the UE sends uplink data, the UE may be forced to exit a dormant period of a C-DRX cycle. Therefore, after receiving the measurement control message, the UE may stop or suspend sending the uplink data. For example, the measurement control message may carry instruction information that is used to instruct the UE to stop or suspend sending the uplink data. After receiving the measurement control message, the UE may stop or suspend sending the uplink data according to the instruction information. For another example, after receiving the measurement control message, the UE may automatically stop or suspend sending the uplink data.

S203. The UE generates a measurement report according to a measurement result obtained by measuring the signal quality of the 2G or 3G network, and the UE sends the measurement report to the eNodeB.

Optionally, after sending the measurement report to the eNodeB or completing the measurement of the signal quality of the 2G or 3G network, the UE may restore to send the uplink data.

Generally, after the inter-RAT measurement is completed, a handover procedure may be entered, and the method may further include the following step:
S204. The UE receives a handover command sent by the eNodeB, where the handover command is used to instruct the UE to be handed over from the LTE network to a CS domain of the 2G or 3G network, and the handover command includes information about a CS domain radio resource that is allocated by the 2G or 3G network for the handover of the UE from the LTE network to the CS domain of the 2G or 3G network; and the UE is handed over from the LTE network to the CS domain of the 2G or 3G network according to the handover command.

However, if the handover from the LTE network to the CS domain of the 2G or 3G network fails, or the eNodeB determines not to execute the handover from the LTE network to the CS domain of the 2G or 3G network, the eNodeB may not send the handover command, and the method may further include the following step:
S204a'. The UE receives a second C-DRX parameter sent by the eNodeB, and according to the second C-DRX parameter, the UE is restored to a C-DRX status before the inter-RAT measurement is performed.

Optionally, the method may further include the following step:
S204b'. The UE receives a request message sent by the eNodeB, where the request message is used to instruct the UE to disable a C-DRX function of the UE.

By means of step S204a' or step S204b', unnecessary inter-RAT measurement (for example, after the handover fails) may be reduced, and impact on a service may be reduced, thereby improving user experience.

In this embodiment, for interaction between the eNodeB and the UE and detailed descriptions of the foregoing processing steps of the UE, refer to another method embodiment.

An embodiment of the present invention provides an inter-RAT measurement method that may be applied to a scenario in which UE located in an LTE network needs to perform inter-RAT measurement in a process in which an eNodeB performs a circuit switched fallback CSFB on the UE. The method may include the following steps.

S300. The eNodeB sends a second C-DRX parameter to the UE located in the LTE network.

After the UE is attached to the LTE network, the eNodeB may send the second C-DRX parameter to the UE, so that the UE reduces power consumption. The second C-DRX parameter is used to configure a second C-DRX cycle for the UE.

S301. The UE listens to and receives data of a PDCCH in an activation period of a second C-DRX cycle according to the second C-DRX parameter, and does not receive the data of the PDCCH in a dormant period of the second C-DRX cycle, where the second C-DRX cycle is determined by the second C-DRX parameter.

When receiving the second C-DRX parameter, the UE may stay in the dormant period or the activation period of the second C-DRX cycle.

S302. The UE sends a request message to an MME, where the request message is used to request the CSFB.

S303. The MME sends a notification message to the eNodeB, where the notification message is used to instruct the eNodeB to hand over the UE from the LTE network to a circuit switched CS domain of a 2G or 3G network for the CSFB.

S304. The eNodeB determines that the UE supports a handover from the LTE network to the CS domain of the 2G or 3G network.

Specifically, the eNodeB may determine, according to a feature group indicator (Feature Group Indicator, FGI) capability reported by the UE, whether the UE supports the handover from the LTE network to the CS domain of the 2G or 3G network. If it is determined that the UE supports the handover from the LTE network to the CS domain of the 2G or 3G network, the UE is instructed to perform the inter-RAT measurement, so as to perform the handover.

There are multiple implementation manners about how to determine whether the UE supports the handover from the LTE network to the CS domain of the 2G or 3G network. This embodiment of the present invention sets no limitation herein.

S305. The eNodeB sends a radio resource control connection reconfiguration message to the UE, where the radio resource control connection reconfiguration message carries a first C-DRX parameter and a measurement parameter, and the first C-DRX parameter and the measurement configuration parameter are used to instruct the UE to measure signal quality of the 2G or 3G network in a dormant period of a first C-DRX cycle.

The first C-DRX parameter and the measurement configuration parameter are used to instruct the UE to measure the signal quality of the 2G or 3G network in the dormant period of the first C-DRX cycle, that is, the radio resource control connection reconfiguration message is used to instruct the UE to measure the signal quality of the 2G or 3G network in the first C-DRX cycle.

The measurement parameter may include related information that is required to measure the signal quality of the 2G or 3G network. The UE may perform measurement configuration on the UE itself according to the measurement configuration parameter. For example, the measurement configuration parameter may include information such as an object, a cell list, a report manner, a measurement identifier, or an event parameter that the UE needs to measure. Further, refer to a 3GPP standard. The first C-DRX parameter may be configured in the following manner: In a same time, a time in which the UE stays in the dormant period of the first C-DRX cycle is longer than a time in which the UE stays in the dormant period of the second C-DRX cycle, so that a time in which the UE can continuously perform the inter-RAT measurement is increased, a time consumed by the inter-RAT measurement is reduced, and the inter-RAT measurement is accelerated. For example, duration T₁ₛ of the dormant period of the first C-DRX cycle may be greater than duration T₂ₛ of the dormant period of the second C-DRX cycle; or a ratio of duration of the dormant period of the first C-DRX cycle to duration of the first C-DRX cycle may be greater than a ratio of duration of the dormant period of the second C-DRX cycle to duration of the second C-DRX cycle. Optionally, because the dormant period of the second C-DRX cycle is generally set to be relatively short, the duration T₁ₛ of the dormant period of the first C-DRX cycle may be not less than 100 ms, or a ratio of the duration T₁ₛ of the dormant period of the first C-DRX cycle to duration T_{1d} of an activation period of the first C-DRX cycle may be greater than 80% (that is, T₁ₛ/T_{1d} > 80%).

For example, a C-DRX parameter may include: a length of a long drx cycle (long drx cycle), a DRX on duration timer (on duration timer), and a drx inactivity timer (drx inactivity timer). If the second C-DRX parameter is set to LONGDRXCYCLE = PSF160, ONDURATIONTIMER = PSF8, and DRXINACTIVITYTIMER = PSF80, it indicates that the duration of the second C-DRX cycle is 160 ms, and if the UE receives no data of a PDCCH during 8 ms + 80 ms, the dormant period of the second C-DRX cycle may be entered, and the duration of the dormant period is 160 ms - 8 ms - 80 ms, that is, 72 ms. Therefore, the first C-DRX parameter may be set to long drx cycle = PSF160, on duration timer = PSF2, drx inactivity timer = PSF2. It indicates that the duration of the first C-DRX cycle is 160 ms, and if the UE receives no data of a PDCCH during 2 ms + 2 ms, the dormant period of the first C-DRX cycle may be entered, and the duration of the dormant period is 160 ms - 2 ms - 2 ms, that is, 156 ms. In this way, the UE can continually perform the inter-RAT measurement in 156 ms, and can complete the inter-RAT measurement in one dormant period.

S306. The UE performs configuration according to the measurement configuration parameter, and sends a measurement control acknowledgement message to the eNodeB after completing the configuration.

The measurement control acknowledgement message may be a radio resource control connection reconfiguration complete (RRC Connection Reconfiguration Complete) message.

S307. The UE measures the signal quality of the 2G or 3G network in the dormant period of the first C-DRX cycle.

In the dormant period of the first C-DRX cycle, the UE does not receive the data of the physical downlink control channel, so as to directly and continuously measure the signal quality of the 2G or 3G network, for example, measure RSRP or RSRQ of the 2G or 3G network.

Optionally, the UE may further perform the inter-RAT measurement in a GAP mode in the activation period of the first C-DRX cycle.

S308. The UE generates a measurement report according to a measurement result, and sends the measurement report to the eNodeB.

After the UE completes the measurement, the UE performs determining according to the measurement configuration parameter. When a specified condition is met, the UE fills the measurement result in the measurement report and sends the measurement report to the eNodeB. The measurement report may include a measurement identifier (ID) and the measurement result (such as measurement values of the RSRP and the RSRQ).

S309. The eNodeB determines, according to the measurement report, whether the handover needs to be performed on the UE, and when determining that the handover is necessary, the eNodeB determines a target cell and performs S310.

S310. The eNodeB sends a handover required message to the mobility management entity MME to trigger a process of the handover from the LTE network to the CS domain of the 2G or 3G network.

The handover required message may be used to request the MME to hand over the UE from the LTE network to the CS domain of the 2G or 3G network for the CSFB. The handover required message may be a handover required message from the LTE network to the CS domain of the 2G or 3G network, such as an SRVCC HO Required (Single Radio Voice Call Continuity Handover Required) message.

S311. Execute the process of the handover from the LTE network to the CS domain of the 2G or 3G network.

After receiving the handover required message, the MME may request, by using a mobile switching center (MSC) of the 2G or 3G network, a base station (Base Station, BS) of the 2G or 3G network to allocate a CS domain resource for the handover of the UE to the CS domain of the 2G or 3G network. After obtaining information about a CS domain radio resource allocated by the base station, the MME may send a handover required response message to the eNodeB, where the handover required response message includes the information about the CS domain radio resource, and the information about the CS domain radio resource is used to hand over the UE from the LTE network to the CS domain of the 2G or 3G network. Therefore, the eNodeB may receive the handover required response message and send a handover command to the UE, where the handover command is used to instruct the UE to be handed over from the LTE network to the CS domain of the 2G or 3G network, and the handover command includes the information about the CS domain radio resource. The UE may be handed over from the LTE network to the CS domain of the 2G or 3G network according to the handover command.

Further, if the foregoing handover process fails, the UE is still in the dormant period of the first C-DRX cycle or the activation period of the first C-DRX cycle. However, generally, for accelerating the inter-RAT measurement, the duration of the dormant period of the first C-DRX cycle is set to be relatively long. After the handover fails, if the UE still stays in the relatively long dormant period, a normal service is affected. Therefore, to resolve this problem, the method may further include the following steps.

S312. The eNodeB determines that the handover process fails.

If the eNodeB receives the handover required response message sent by the MME, the handover required response message carries a handover failure indication, and the handover failure indication is used to indicate that the handover process fails, it is determined that the handover process fails; or if the eNodeB receives, in a preset time, no handover required response message sent by the MME, the eNodeB determines that the handover process fails.

S313. The eNodeB sends the second C-DRX parameter to the UE, so that the UE is restored to a C-DRX status before the inter-RAT measurement is performed.

The UE may listen to and receive the data of the PDCCH in the activation period of the second C-DRX cycle according to the second C-DRX parameter, and not receive the data of the PDCCH in the dormant period of the second C-DRX cycle.

This embodiment of the present invention provides an inter-RAT measurement method. In a process of performing a circuit switched fallback CSFB on UE located in an LTE network, an eNodeB sends a measurement control message to the UE before the UE is handed over from the LTE network to a CS domain of a 2G or 3G network, where the measurement control message includes a first C-DRX parameter and a measurement configuration parameter. The UE may continuously measure signal quality of the 2G or 3G network in a dormant period of a first C-DRX cycle according to the first C-DRX parameter and an instruction of the measurement configuration parameter, so as to avoid performing measurement of only 6 ms in a cycle of 40 ms/80 ms, thereby effectively accelerating the measurement of the signal quality of the 2G/3G network performed by the UE located in the LTE network, shortening a measurement time, and resolving a problem of an excessively long call handover preparation time or voice session interruption caused by inter-RAT measurement performed in a GAP mode in the prior art.

Further, because the duration of the dormant period of the first C-DRX cycle is determined by the first C-DRX parameter, the first C-DRX parameter may be configured in the following manner: In the entire first C-DRX cycle, the duration of the activation period (that is, a time length of the activation period) is as short as possible when the duration is greater than zero, and the duration of the dormant period (that is, a time length of the dormant period) is as long as possible when the duration is less than the duration of the first C-DRX cycle, so that the UE may stay in the dormant period of the first C-DRX cycle for a relatively long time to continuously measure the signal quality of the 2G/3G network in the dormant period of the first C-DRX cycle, so as to greatly accelerate the inter-RAT measurement.

The inter-RAT measurement method provided in this embodiment of the present invention may be further applied to a scenario in which a VoLTE service needs to be handed over to a CS domain of a 2G/3G network in a process in which an eNodeB provides the VoLTE service for UE located in an LTE network, and inter-RAT measurement is performed before the handover. In this case, steps S302 and S303 may be replaced with S302' and S303'.

S302'. The UE attached to the LTE network is performing a VoLTE service.

S303'. The eNodeB determines that the handover from the LTE network to the CS domain of the 2G or 3G network needs to be performed on the UE.

For example, the eNodeB may determine, according to a measurement report of LTE network quality sent by the UE, that the LTE network cannot continue to provide the service for the UE, that is, determine that the handover from the LTE network to the CS domain of the 2G or 3G network needs to be performed on the UE.

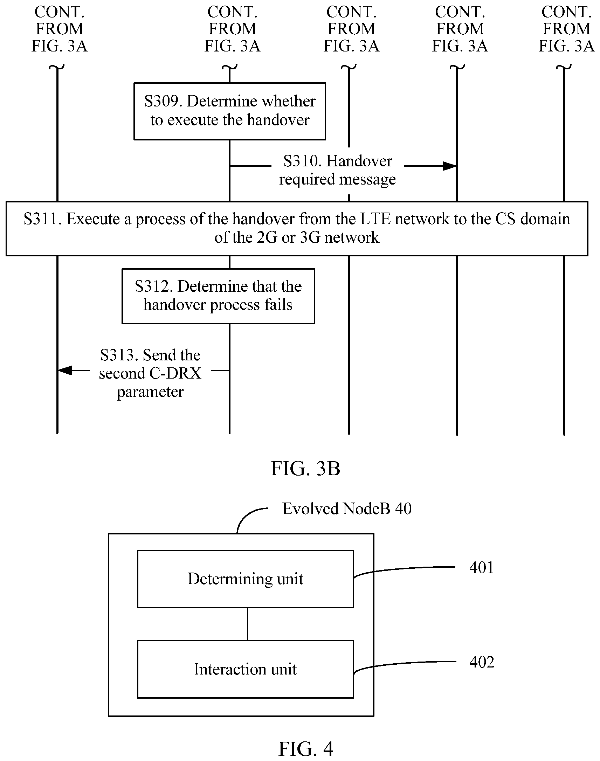

Corresponding to the foregoing method embodiment, an embodiment of the present invention proposes an evolved NodeB eNodeB. As shown in FIG. 4, the evolved NodeB 40 includes a determining unit 401 and an interaction unit 402.

The determining unit 401 is configured to determine that UE supports a handover from an LTE network to a CS domain of a 2G or 3G network. For example, in a process of performing a circuit switched fallback CSFB on the user equipment UE located in the Long Term Evolution LTE network or in a process of providing a voice over Long Term Evolution VoLTE service for the UE, the eNodeB determines that the UE supports the handover from the LTE network to the circuit switched CS domain of the 2G or 3G network.

The interaction unit 402 is configured to send a measurement control message to the UE, where the measurement control message includes a first C-DRX parameter and a measurement configuration parameter, and the first C-DRX parameter and the measurement configuration parameter are used to instruct the UE to measure signal quality of the 2G or 3G network in a dormant period of a first C-DRX cycle. The measurement control message may be a radio resource control connection reconfiguration (RRC Connection Reconfiguration) message.

Optionally, the first C-DRX parameter and the measurement configuration parameter may be further used to instruct the UE to measure the signal quality of the 2G or 3G network in a GAP mode in an activation period of the first C-DRX cycle.

Optionally, the first C-DRX cycle may be determined by the first C-DRX parameter, and duration of the dormant period of the first C-DRX cycle is not less than 51 ms; or the first C-DRX cycle is determined by the first C-DRX parameter, and a ratio of duration of the dormant period of the first C-DRX cycle to duration of the first C-DRX cycle is greater than 0.6.

Optionally, to reduce power consumption of the shown UE or for another objective, the interaction unit 402 may send a second C-DRX parameter to the UE before sending the measurement control message to the UE, where the second C-DRX parameter is used to configure a second C-DRX cycle for the UE, so that the UE listens to and receives data of a PDCCH in an activation period of the second C-DRX cycle, and does not receive the data of the PDCCH in a dormant period of the second C-DRX cycle, so as to reduce the power consumption of the UE.

Optionally, the second C-DRX cycle may be determined by the second C-DRX parameter. Therefore, the first C-DRX parameter may be configured as follows: The duration of the dormant period of the first C-DRX cycle is greater than duration of the dormant period of the second C-DRX cycle; or the ratio of the duration of the dormant period of the first C-DRX cycle to the duration of the first C-DRX cycle is greater than a ratio of duration of the dormant period of the second C-DRX cycle to duration of the second C-DRX cycle, so that a time in which the UE can continuously perform inter-RAT measurement is increased, a time consumed by the inter-RAT measurement is reduced, and the inter-RAT measurement is accelerated.

Optionally, the interaction unit 402 may further receive a measurement report returned by the UE; determine, according to the measurement report, not to execute the handover from the LTE network to the CS domain of the 2G or 3G network; and send the second C-DRX parameter to the UE; or
the interaction unit 402 may further receive a measurement report returned by the UE, send a handover required message to a mobility management entity MME to trigger a process of the handover from the LTE network to the CS domain of the 2G or 3G network, determine that the handover process fails, and send the second C-DRX parameter to the UE; or
the interaction unit 402 may further receive a measurement report returned by the UE; determine, according to the measurement report, not to execute the handover from the LTE network to the CS domain of the 2G or 3G network; and send a request message to the UE, where the request message is used to instruct the UE to disable a C-DRX function of the UE; or
the interaction unit 402 may further receive a measurement report returned by the UE, send a handover required message to a mobility management entity MME to trigger a process of the handover from the LTE network to the CS domain of the 2G or 3G network, determine that the handover process fails, and send a request message to the UE.

Optionally, when the UE sends uplink data, the UE may be forced to exit the dormant period of the first C-DRX cycle, and the inter-RAT measurement is affected. Therefore, the measurement control message may carry instruction information that is used to instruct the UE to stop or suspend sending the uplink data.

This embodiment of the present invention provides an evolved NodeB. An interaction unit 402 of the evolved NodeB may send a measurement control message to UE when a determining unit 401 of the evolved NodeB determines that the UE supports a handover from an LTE network to a CS domain of a 2G or 3G network, where the measurement control message includes a first C-DRX parameter and a measurement configuration parameter. In this way, the UE can continually measure signal quality of the 2G or 3G network in a dormant period of a first C-DRX cycle according to the first C-DRX parameter and an instruction of the measurement configuration parameter, so as to avoid performing measurement of only 6 ms in a cycle of 40 ms/80 ms, thereby effectively accelerating the measurement of the signal quality of the 2G/3G network performed by the UE located in the LTE network, shortening a measurement time, and resolving a problem of an excessively long call handover preparation time or voice session interruption caused by inter-RAT measurement performed in a GAP mode in the prior art.

Further, because the duration of the dormant period of the first C-DRX cycle is determined by the first C-DRX parameter, the first C-DRX parameter may be configured in the following manner: In the entire first C-DRX cycle, duration of the activation period (that is, a time length of the activation period) is as short as possible when the duration is greater than zero, and the duration of the dormant period (that is, a time length of the dormant period) is as long as possible when the duration is less than the duration of the first C-DRX cycle, so that the UE may stay in the dormant period of the first C-DRX cycle for a relatively long time to continuously measure the signal quality of the 2G/3G network in the dormant period of the first C-DRX cycle, so as to greatly accelerate the inter-RAT measurement.

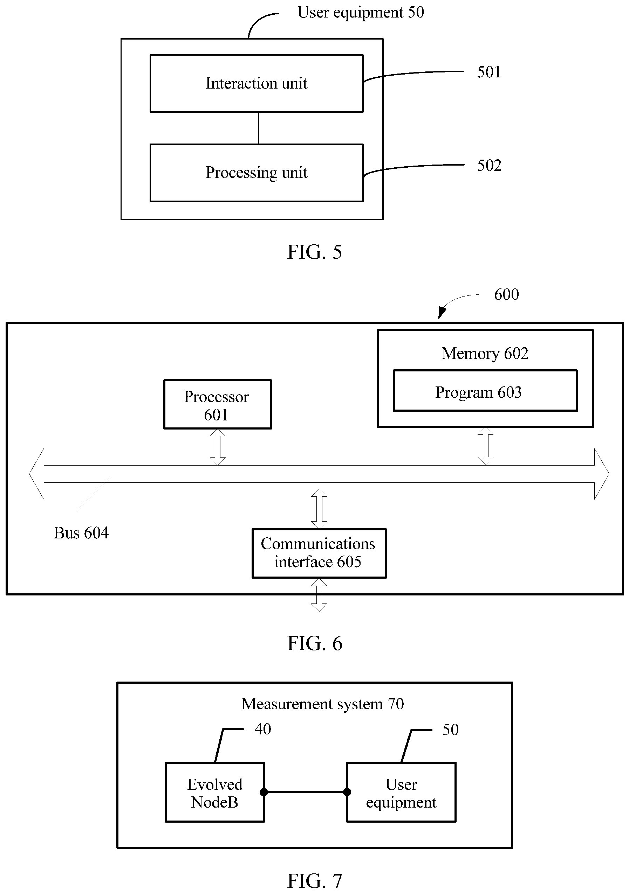

Corresponding to the foregoing method embodiment, an embodiment of the present invention proposes user equipment. As shown in FIG. 5, the user equipment 50 includes an interaction unit 501 and a processing unit 502.

The interaction unit 501 is configured to receive a measurement control message sent by an eNodeB, where the measurement control message includes a first C-DRX parameter and a measurement configuration parameter, and the first C-DRX parameter and the measurement configuration parameter are used to instruct the UE to measure signal quality of a 2G or 3G network in a dormant period of a first C-DRX cycle. For example, in a process in which the eNodeB performs a CSFB on the user equipment UE or in a process in which the eNodeB provides a VoLTE service for the UE, the interaction unit 501 may receive the measurement control message sent by the eNodeB.

The processing unit 502 is configured to measure the signal quality of the 2G or 3G network in the dormant period of the first C-DRX cycle.

Optionally, the first C-DRX cycle may be determined by the first C-DRX parameter, and duration of the dormant period of the first C-DRX cycle is not less than 51 ms; or the first C-DRX cycle may be determined by the first C-DRX parameter, and a ratio of duration of the dormant period of the first C-DRX cycle to duration of the first C-DRX cycle is greater than 0.6.

Optionally, the interaction unit 501 is further configured to: before receiving the measurement control message sent by the eNodeB, receive a second C-DRX parameter sent by the eNodeB, where the second C-DRX parameter is used to configure a second C-DRX cycle for the user equipment. The interaction unit 501 may listen to and receive data of a PDCCH in an activation period of the second C-DRX cycle according to the second C-DRX parameter, and not receive the data of the PDCCH in a dormant period of the second C-DRX cycle, so as to reduce power consumption of the UE.

Optionally, the second C-DRX cycle is determined by the second C-DRX parameter. Therefore, the first C-DRX parameter may be configured as follows: The duration of the dormant period of the first C-DRX cycle is greater than duration of the dormant period of the second C-DRX cycle; or the ratio of the duration of the dormant period of the first C-DRX cycle to the duration of the first C-DRX cycle is greater than a ratio of duration of the dormant period of the second C-DRX cycle to duration of the second C-DRX cycle.

Optionally, the processing unit 502 may be further configured to generate a measurement report according to a measurement result obtained by measuring the signal quality of the 2G or 3G network. The interaction unit 501 may be further configured to send the measurement report to the eNodeB.

Optionally, after sending the measurement report, the interaction unit 501 may further receive the second C-DRX parameter sent by the eNodeB, where the second C-DRX parameter is used to configure the second C-DRX cycle for the user equipment, so that the user equipment is restored to a C-DRX status before the inter-RAT measurement is performed; or after sending the measurement report, the interaction unit 501 receives a request message sent by the eNodeB, where the request message is used to instruct the UE to disable a C-DRX function of the UE. The processing unit 502 is further configured to disable the C-DRX function of the UE.

Optionally, when the UE sends uplink data, the UE may be forced to exit a dormant period of a C-DRX cycle. Therefore, after receiving the measurement control message sent by the eNodeB, the interaction unit 501 may stop sending the uplink data. Further, the interaction unit 501 may further restore to send the uplink data after sending the measurement report to the eNodeB.

This embodiment of the present invention provides user equipment. An interaction unit 501 of the user equipment may receive a measurement control message sent by an evolved NodeB, where the measurement control message includes a first C-DRX parameter and a measurement configuration parameter. A processing unit 502 of the user equipment may continuously measure signal quality of a 2G or 3G network in a dormant period of a first C-DRX cycle according to the first C-DRX parameter and an instruction of the measurement configuration parameter, so as to avoid performing measurement of only 6 ms in a cycle of 40 ms/80 ms, thereby effectively accelerating the measurement of the signal quality of the 2G/3G network performed by the UE located in an LTE network, shortening a measurement time, and resolving a problem of an excessively long call handover preparation time or voice session interruption caused by inter-RAT measurement performed in a GAP mode in the prior art.

Further, because the duration of the dormant period of the first C-DRX cycle is determined by the first C-DRX parameter, the first C-DRX parameter may be configured in the following manner: In the entire first C-DRX cycle, duration of the activation period (that is, a time length of the activation period) is as short as possible when the duration is greater than zero, and the duration of the dormant period (that is, a time length of the dormant period) is as long as possible when the duration is less than the duration of the first C-DRX cycle, so that the UE may stay in the dormant period of the first C-DRX cycle for a relatively long time to continuously measure the signal quality of the 2G/3G network in the dormant period of the first C-DRX cycle, so as to greatly accelerate the inter-RAT measurement.

A person skilled in the art can understand that in the foregoing embodiments of FIG. 4 and FIG. 5, an interaction unit configured to send a message or receive a message may be implemented by using a transmitter, implemented by using a receiver, or implemented by using a transceiver. In physical implementation, the transmitter or the transceiver may be implemented by one physical entity or by multiple physical entities, and the transmitter and the transceiver may be implemented by one physical entity or by multiple physical entities. This is not limited in the present invention. Another unit, such as a determining unit or a processing unit, may be implemented by using one or more processors. This is not limited in the present invention.

As shown in FIG. 6, an embodiment of the present invention provides an inter-RAT measurement apparatus, and the apparatus may include:
a processor 601, a memory 602, a bus 604, and a communications interface 605. The processor 601, the memory 602, and the communications interface 605 are connected to each other and communicate with each other by using the bus 604.

The processor 601 may be a single-core or multi-core central processing unit, or an application-specific integrated circuit, or one or more integrated circuits configured to implement this embodiment of the present invention.

The memory 602 may be a high-speed RAM memory, or may be a non-volatile memory (non-volatile memory), such as at least one magnetic disk memory.

The memory 602 is configured to store a computer execution instruction 603. Specifically, the computer execution instruction 603 may include program code.

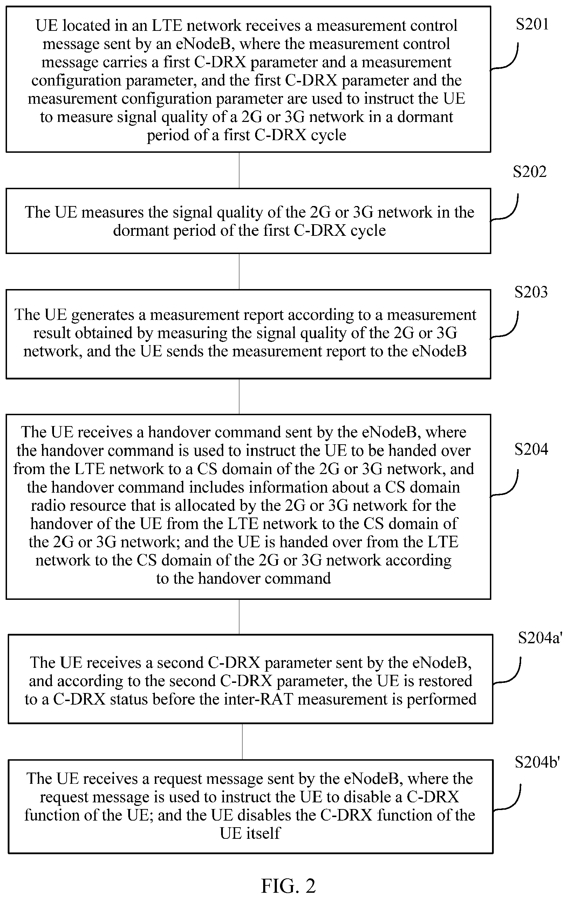

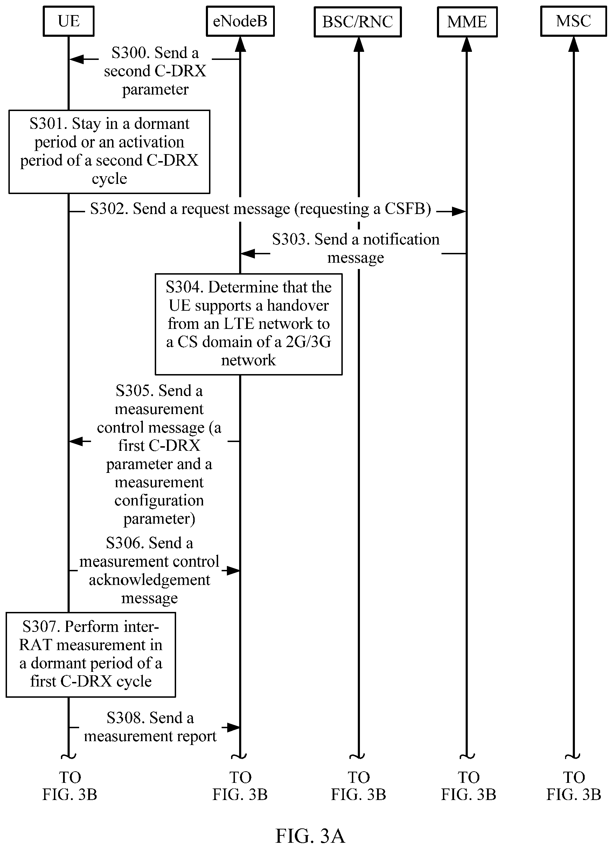

When the apparatus runs, the processor 601 may execute, by running the computer execution instruction 603, an inter-RAT measurement method procedure described in the method embodiment corresponding to any one of FIG. 1 to FIG. 3A and FIG. 3B. When the inter-RAT measurement method procedure described in the method embodiment corresponding to FIG. 1 or FIG. 3A and FIG. 3B is executed, the apparatus may be an evolved NodeB. When the inter-RAT measurement method procedure described in the method embodiment corresponding to FIG. 2 or FIG. 3A and FIG. 3B is executed, the apparatus may be user equipment.

An embodiment of the present invention provides a computer readable medium, including a computer execution instruction. When a processor of a computer executes the computer execution instruction, the computer executes the inter-RAT measurement method described in the method embodiment corresponding to FIG. 1 or FIG. 3A and FIG. 3B.

An embodiment of the present invention provides a computer readable medium, including a computer execution instruction. When a processor of a computer executes the computer execution instruction, the computer executes the inter-RAT measurement method described in the method embodiment corresponding to FIG. 2 or FIG. 3A and FIG. 3B.

Referring to FIG. 7, an embodiment of the present invention provides a measurement system, including an evolved NodeB 40 and user equipment 50. For an action separately executed by the evolved NodeB 40 and the user equipment 50 and interaction between the evolved NodeB 40 and the user equipment 50, refer to the descriptions of the method embodiments corresponding to FIG. 1 to FIG. 3A and FIG. 3B, or refer to the descriptions of the apparatus embodiments corresponding to FIG. 4 and FIG. 5, and details are not described herein.

The LTE network mentioned in the present invention includes an LTE A network and an LTE network of a version that may subsequently appear.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

## Claims

1. An inter-RAT measurement method, wherein the method comprises:
in a process of performing a circuit switched fallback CSFB on terminal device located in a Long Term Evolution LTE network or in a process of providing a voice over Long Term Evolution VoLTE service for the UE, determining (S101), by an evolved NodeB eNodeB, that the UE supports a handover from the LTE network to a circuit switched CS domain of a 2G or 3G network; and
sending (S102), by the eNodeB, a measurement control message to the UE, wherein the measurement control message comprises a first connected-discontinuous reception C-DRX parameter and a measurement configuration parameter, and the first C-DRX parameter and the measurement configuration parameter are used to instruct the UE to measure signal quality of the 2G or 3G network in a dormant period of a first C-DRX cycle.

2. The method according to claim 1, wherein the first C-DRX cycle is determined by the first C-DRX parameter, and duration of the dormant period of the first C-DRX cycle is not less than 51 ms.

3. The method according to claim 1 or 2, wherein the first C-DRX cycle is determined by the first C-DRX parameter, and a ratio of the duration of the dormant period of the first C-DRX cycle to duration of the first C-DRX cycle is greater than 0.6.

4. The method according to any one of claims 1 to 3, wherein before the sending, by the eNodeB, a measurement control message to the UE, the method further comprises:
sending, by the eNodeB, a second C-DRX parameter to the UE, wherein the second C-DRX parameter is used to configure a second C-DRX cycle for the UE.

5. The method according to claim 4, wherein
the duration of the dormant period of the first C-DRX cycle is greater than duration of a dormant period of the second C-DRX cycle; or
the ratio of the duration of the dormant period of the first C-DRX cycle to the duration of the first C-DRX cycle is greater than a ratio of duration of a dormant period of the second C-DRX cycle to duration of the second C-DRX cycle;
wherein the first C-DRX cycle is determined by the first C-DRX parameter, and the second C-DRX cycle is determined by the second C-DRX parameter.

6. The method according to claim 4 or 5, wherein
if the eNodeB receives a measurement report returned by the UE and determines, according to the measurement report, not to execute the handover from the LTE network to the CS domain of the 2G or 3G network, the eNodeB sends the second C-DRX parameter to the UE; or
if the eNodeB receives a measurement report returned by the UE, sends a handover required message to a mobility management entity MME to trigger a process of the handover from the LTE network to the CS domain of the 2G or 3G network, and determines that the handover process fails, the eNodeB sends the second C-DRX parameter to the UE.

7. The method according to any one of claims 1 to 5, wherein
if the eNodeB receives a measurement report returned by the UE and determines, according to the measurement report, not to execute the handover from the LTE network to the CS domain of the 2G or 3G network, the eNodeB sends a request message to the UE, wherein the request message is used to instruct the UE to disable a C-DRX function of the UE; or
if the eNodeB receives a measurement report returned by the UE, sends a handover required message to a mobility management entity MME to trigger a process of the handover from the LTE network to the CS domain of the 2G or 3G network, and determines that the handover process fails, the eNodeB sends a request message to the UE.

8. The method according to any one of claims 1 to 7, wherein the measurement configuration parameter further comprises instruction information used to instruct the UE to stop sending uplink data.

9. An evolved NodeB, comprising:
a determining unit (401), configured to: in a process in which the evolved NodeB performs a circuit switched fallback CSFB on terminal device located in a Long Term Evolution LTE network or in a process in which the evolved NodeB provides a voice over Long Term Evolution VoLTE service for the UE, determine that the UE supports a handover from the LTE network to a circuit switched CS domain of a 2G or 3G network; and
an interaction unit (402), configured to send a measurement control message to the UE, wherein the measurement control message comprises a first connected-discontinuous reception C-DRX parameter and a measurement configuration parameter, and the first C-DRX parameter and the measurement configuration parameter are used to instruct the UE to measure signal quality of the 2G or 3G network in a dormant period of a first C-DRX cycle.

10. The evolved NodeB according to claim 9, wherein the first C-DRX cycle is determined by the first C-DRX parameter, and duration of the dormant period of the first C-DRX cycle is not less than 51 ms.

11. The evolved NodeB according to claim 9 or 10, wherein the interaction unit is further configured to: before sending the measurement control message to the UE, send a second C-DRX parameter to the UE, wherein the second C-DRX parameter is used to configure a second C-DRX cycle for the UE.

12. The evolved NodeB according to claim 11, wherein
the duration of the dormant period of the first C-DRX cycle is greater than duration of a dormant period of the second C-DRX cycle; or
a ratio of the duration of the dormant period of the first C-DRX cycle to duration of the first C-DRX cycle is greater than a ratio of duration of a dormant period of the second C-DRX cycle to duration of the second C-DRX cycle;
wherein the first C-DRX cycle is determined by the first C-DRX parameter, and the second C-DRX cycle is determined by the second C-DRX parameter.

13. The evolved NodeB according to claim 11 or 12, wherein the interaction unit is further configured to: receive a measurement report returned by the UE; determine, according to the measurement report, not to execute the handover from the LTE network to the CS domain of the 2G or 3G network; and send the second C-DRX parameter to the UE; or
the interaction unit is further configured to: receive a measurement report returned by the UE, send a handover required message to a mobility management entity MME to trigger a process of the handover from the LTE network to the CS domain of the 2G or 3G network, determine that the handover process fails, and send the second C-DRX parameter to the UE.

14. The evolved NodeB according to any one of claims 9 to 13, wherein the measurement configuration parameter further comprises instruction information used to instruct the UE to stop sending uplink data.

## Patentansprüche

1. Inter-RAT-Messverfahren, wobei das Verfahren umfasst:
Bestimmen (S101), dass das UE eine Übergabe von einem "Long Term Evolution", LTE,-Netzwerk auf eine leitungsvermittelte CS-Domäne eines 2G- oder 3G-Netzwerks unterstützt, durch einen "evolved NodeB", "eNodeB", in einem Prozess zum Durchführen eines leitungsvermittelten Rückgriffs, CSFB, an einem Endgerät, welches sich in dem LTE-Netzwerk befindet, oder in einem Verfahren des Bereitstellens eines Sprache-über-"Long Term Evolution", VoLTE,-Dienstes für das UE, und
Senden (S102) einer Messsteuerungsnachricht an das UE durch den "eNodeB", wobei die Messsteuerungsnachricht einen ersten verbunden-unterbrochen-Empfangs, C-DRX,-Parameter und einen Messkonfigurationsparameter umfasst, und der erste C-DRX-Parameter und der Messkonfigurationsparameter verwendet werden, um das UE anzuweisen, die Signalqualität des 2G- oder 3G-Netzwerks in einer Ruheperiode eines ersten C-DRX-Zyklus zu messen.

2. Verfahren nach Anspruch 1, wobei der erste C-DRX-Zyklus durch den ersten C-DRX-Parameter bestimmt wird und die Dauer der Ruheperiode des ersten C-DRX-Zyklus nicht weniger als 51 ms beträgt.

3. Verfahren nach Anspruch 1 oder 2, wobei der erste C-DRX-Zyklus durch den ersten C-DRX-Parameter bestimmt wird und ein Verhältnis der Dauer der Ruheperiode des ersten C-DRX-Zyklus zu der Dauer des ersten C-DRX-Zyklus größer als 0,6 ist.

4. Verfahren nach einem der Ansprüche 1 bis 3, wobei das Verfahren vor dem Senden einer Messsteuerungsnachricht an das UE durch den "eNodeB" ferner umfasst:
Senden eines zweiten C-DRX-Parameters an das UE durch den "eNodeB", wobei der zweite C-DRX-Parameter verwendet wird, um einen zweiten C-DRX-Zyklus für das UE zu konfigurieren.

5. Verfahren nach Anspruch 4, wobei
die Dauer der Ruheperiode des ersten C-DRX-Zyklus größer als die Dauer einer Ruheperiode des zweiten C-DRX-Zyklus ist; oder
das Verhältnis der Dauer der Ruheperiode des ersten C-DRX-Zyklus zu der Dauer des ersten C-DRX-Zyklus größer als ein Verhältnis der Dauer einer Ruheperiode des zweiten C-DRX-Zyklus zu der Dauer des zweiten C-DRX-Zyklus ist;
wobei der erste C-DRX-Zyklus durch den ersten C-DRX-Parameter bestimmt wird und der zweite C-DRX-Zyklus durch den zweiten C-DRX-Parameter bestimmt wird.

6. Verfahren nach Anspruch 4 oder 5, wobei
der "eNodeB", falls er einen Messbericht empfängt, der von dem UE zurückgegeben wird, und gemäß dem Messbericht bestimmt, die Übergabe von dem LTE-Netzwerk zu der CS-Domäne des 2G- oder 3G-Netzwerks nicht durchzuführen, den zweiten C-DRX-Parameter an das UE sendet; oder
der "eNodeB", falls er einen Messbericht empfängt, der von dem UE zurückgegeben wird, eine 'Übergabe erforderlich'-Nachricht an eine Mobilitätsmanagement-Entität, MME, sendet, um einen Prozess der Übergabe von dem LTE-Netzwerk an die CS-Domäne des 2G- oder 3G-Netzwerks auszulösen, und bestimmt, dass der Übergabeprozess fehlschlägt, den zweiten C-DRX-Parameter an das UE sendet.

7. Verfahren nach einem der Ansprüche 1 bis 5, wobei
der "eNodeB", falls er einen Messbericht empfängt, der von dem UE zurückgegeben wird, und gemäß dem Messbericht bestimmt, die Übergabe von dem LTE-Netzwerk an die CS-Domäne des 2G- oder 3G-Netzwerks nicht durchzuführen, eine Anforderungsnachricht an das UE sendet, wobei die Anforderungsnachricht verwendet wird, um das UE anzuweisen, eine C-DRX-Funktion des UEs zu deaktivieren; oder
der "eNodeB", falls er einen Messbericht empfängt, der von dem UE zurückgegeben wird, eine 'Übergabe erforderlich'-Nachricht an eine Mobilitätsmanagement-Entität, MME, sendet, um einen Prozess der Übergabe von dem LTE-Netzwerk an die CS-Domäne des 2G- oder 3G-Netzwerks auszulösen, und bestimmt, dass das Übergabeverfahren fehlschlägt, eine Anforderungsnachricht an das UE sendet.

8. Verfahren nach einem der Ansprüche 1 bis 7, wobei der Messkonfigurationsparameter ferner Anweisungsinformationen umfasst, die verwendet werden, um das UE anzuweisen, das Senden von "Uplink"-Daten zu stoppen.

9. "Evolved NodeB", umfassend:
eine Bestimmungseinheit (401), die konfiguriert ist zum Bestimmen, dass das UE eine Übergabe von einem "Long Term Evolution", LTE,-Netzwerk auf eine leitungsvermittelte CS-Domäne eines 2G- oder 3G-Netzwerks unterstützt, in einem Prozess, in dem der "evolved NodeB" einen leitungsvermittelten Rückgriff, CSFB, an einem Endgerät durchführt, welches sich in dem LTE-Netzwerk befindet, oder in einem Prozess, in dem der "evolved NodeB" einen Sprache-über-"Long Term Evolution", VoLTE,-Dienst für das UE bereitstellt, und
eine Interaktionseinheit (402), die konfiguriert ist zum Senden einer Messsteuerungsnachricht an das UE, wobei die Messsteuerungsnachricht einen ersten verbunden-unterbrochen-Empfangs, C-DRX,-Parameter und einen Messkonfigurationsparameter umfasst, und der erste C-DRX-Parameter und der Messkonfigurationsparameter verwendet werden, um das UE anzuweisen, die Signalqualität des 2G- oder 3G-Netzwerks in einer Ruheperiode eines ersten C-DRX-Zyklus zu messen.

10. "Evolved NodeB" nach Anspruch 9, wobei der erste C-DRX-Zyklus durch den ersten C-DRX-Parameter bestimmt wird und die Dauer der Ruheperiode des ersten C-DRX-Zyklus nicht weniger als 51 ms beträgt.

11. "Evolved NodeB" nach Anspruch 9 oder 10, wobei die Interaktionseinheit ferner konfiguriert ist zum Senden eines zweiten C-DRX-Parameters an das UE vor dem Senden der Messsteuerungsnachricht an das UE, wobei der zweite C-DRX-Parameter verwendet wird, um einen zweiten C-DRX-Zyklus für das UE zu konfigurieren.

12. "Evolved NodeB" nach Anspruch 11, wobei:
die Dauer der Ruheperiode des ersten C-DRX-Zyklus größer als die Dauer einer Ruheperiode des zweiten C-DRX-Zyklus ist; oder
ein Verhältnis der Dauer der Ruheperiode des ersten C-DRX-Zyklus zu der Dauer des ersten C-DRX-Zyklus größer als ein Verhältnis der Dauer einer Ruheperiode des zweiten C-DRX-Zyklus zu der Dauer des zweiten C-DRX-Zyklus ist;
wobei der erste C-DRX-Zyklus durch den ersten C-DRX-Parameter bestimmt wird und der zweite C-DRX-Zyklus durch den zweiten C-DRX-Parameter bestimmt wird.

13. "Evolved NodeB" nach Anspruch 11 oder 12, wobei die Interaktionseinheit ferner konfiguriert ist zum Empfangen eines Messberichts, der von dem UE zurückgegeben wird; Bestimmen gemäß dem Messbericht, die Übergabe von dem LTE-Netzwerk an die CS-Domäne des 2G- oder 3G-Netzwerks nicht durchzuführen; und Senden des zweiten C-DRX-Parameters an das UE; oder
die Interaktionseinheit ferner konfiguriert ist zum Empfangen eines Messberichts, der von dem UE zurückgegeben wird, Senden einer 'Übergabe erforderlich'-Nachricht an eine Mobilitätsmanagement-Entität, MME, um einen Prozess der Übergabe von dem LTE-Netzwerk an die CS-Domäne des 2G- oder 3G-Netzwerks auszulösen, Bestimmen, dass der Übergabeprozess fehlschlägt, und Senden des zweiten C-DRX-Parameters an das UE.

14. "Evolved NodeB" nach einem der Ansprüche 9 bis 13, wobei der Messkonfigurationsparameter ferner Anweisungsinformationen umfasst, die verwendet werden, um das UE anzuweisen, das Senden von "Uplink"-Daten zu stoppen.

## Revendications

1. Procédé de mesure de technologie d'accès inter-radio (inter-RAT), le procédé comprenant :
dans un procédé de réalisation d'un CSFB de repli à commutation de circuits sur un dispositif terminal situé dans un réseau LTE d'évolution à long terme, ou dans un processus de fourniture d'un service VoLTE d'évolution à long terme vocal pour l'UE, la détermination (S101), par une station de base évoluée (noeud B évolué), que l'UE prend en charge une commutation du réseau LTE à un domaine CS à commutation de circuits d'un réseau 2G ou 3G ; et
l'envoi (S102), par le noeud B évolué, d'un message de commande de mesure à l'UE, le message de commande de mesure comprenant un premier paramètre C-DRX de réception discontinue connectée et un paramètre de configuration de mesure, et le premier paramètre C-DRX et le paramètre de configuration de mesure étant utilisés pour donner l'instruction à l'UE de mesurer la qualité de signal du réseau 2G ou 3G dans une période de latence d'un premier cycle C-DRX.

2. Procédé selon la revendication 1, le premier cycle C-DRX étant déterminé par le premier paramètre C-DRX, et la durée de la période de latence du premier cycle C-DRX n'étant pas inférieure à 51 ms.

3. Procédé selon la revendication 1 ou 2, le premier cycle C-DRX étant déterminé par le premier paramètre C-DRX, et un ratio de la durée de la période de latence du premier cycle C-DRX sur la durée du premier cycle C-DRX étant supérieur à 0,6.

4. Procédé selon l'une quelconque des revendications 1 à 3, dans lequel avant l'envoi, par le noeud B évolué, d'un message de commande de mesure à l'UE, le procédé comprend en outre :
l'envoi par le noeud B évolué d'un second paramètre C-DRX à l'UE, le second paramètre C-DRX étant utilisé pour configurer un second cycle C-DRX pour l'UE.

5. Procédé selon la revendication 4,
la durée de la période de latence du premier cycle C-DRX étant supérieure à la durée d'une période de latence du second cycle C-DRX ; ou
le ratio de la durée de la période de latence du premier cycle C-DRX sur la durée du premier cycle C-DRX étant supérieur à un ratio de la durée d'une période de latence du second cycle C-DRX sur la durée du second cycle C-DRX ;
le premier cycle C-DRX étant déterminé par le premier paramètre C-DRX, et le second cycle C-DRX étant déterminé par le second paramètre C-DRX.

6. Procédé selon la revendication 4 ou 5, dans lequel
si le noeud B évolué reçoit un rapport de mesure renvoyé par l'UE et détermine, en fonction du rapport de mesure, de ne pas exécuter la commutation du réseau LTE au domaine CS du réseau 2G ou 3G, le noeud B évolué envoie le second paramètre C-DRX à l'UE ; ou
si le noeud B évolué reçoit un rapport de mesure renvoyé par l'UE, envoie un message requis de commutation à une entité de gestion de mobilité, MME, pour déclencher un processus de la commutation du réseau LTE au domaine CS du réseau 2G ou 3G, et détermine que le processus de commutation échoue, le noeud B évolué envoie le second paramètre C-DRX à l'UE.

7. Procédé selon l'une quelconque des revendications 1 à 5, dans lequel si le noeud B évolué reçoit un rapport de mesure renvoyé par l'UE et détermine, en fonction du rapport de mesure, de ne pas exécuter la commutation du réseau LTE au domaine CS du réseau 2G ou 3G, le noeud B évolué envoie un message de demande à l'UE, le message de demande étant utilisé pour donner l'instruction à l'UE de désactiver une fonction C-DRX de l'UE ; ou
si le noeud B évolué reçoit un rapport de mesure renvoyé par l'UE, envoie un message requis de commutation à une entité de gestion de mobilité, MME, pour déclencher un processus de la commutation du réseau LTE au domaine CS du réseau 2G ou 3G, et détermine que le processus de commutation échoue, le noeud B évolué envoie un message de demande à l'UE.

8. Procédé selon l'une quelconque des revendications 1 à 7, le paramètre de configuration de mesure comprenant en outre des informations d'instruction utilisées pour donner l'instruction à l'UE d'arrêter d'envoyer des données de liaison montante.

9. Noeud B évolué, comprenant :
une unité de détermination (401), configurée pour : dans un processus dans lequel le noeud B évolué effectue un CSFB de repli à commutation de circuits sur un dispositif terminal situé dans un réseau LTE d'évolution à long terme, ou dans un processus dans lequel le noeud B évolué fournit une voix sur un service VoLTE d'évolution à long terme pour l'UE, déterminer que l'UE prend en charge une commutation du réseau LTE à un domaine CS à commutation de circuits d'un réseau 2G ou 3G ; et
une unité d'interaction (402), configurée pour envoyer un message de commande de mesure à L'UE, le message de commande de mesure comprenant un premier paramètre C-DRX de réception discontinue connectée et un paramètre de configuration de mesure, et le premier paramètre C-DRX et le paramètre de configuration de mesure étant utilisés pour donner l'instruction à l'UE de mesurer la qualité de signal du réseau 2G ou 3G dans une période de latence d'un premier cycle C-DRX.

10. Noeud B évolué selon la revendication 9, le premier cycle C-DRX étant déterminé par le premier paramètre C-DRX, et la durée de la période de latence du premier cycle C-DRX n'étant pas inférieure à 51 ms.

11. Noeud B évolué selon la revendication 9 ou 10, l'unité d'interaction étant en outre configurée pour : avant d'envoyer le message de commande de mesure à l'UE, envoyer un second paramètre de C-DRX à l'UE, le second paramètre C-DRX étant utilisé pour configurer un second cycle C-DRX pour l'UE.

12. Noeud B évolué selon la revendication 11,
la durée de la période de latence du premier cycle C-DRX étant supérieure à la durée d'une période de latence du second cycle C-DRX ; ou
un ratio de la durée de la période de latence du premier cycle C-DRX sur la durée du premier cycle C-DRX étant supérieur à un ratio de la durée d'une période de latence du second cycle C-DRX sur la durée du second cycle C-DRX ;
le premier cycle C-DRX étant déterminé par le premier paramètre C-DRX, et le second cycle C-DRX étant déterminé par le second paramètre C-DRX.

13. Noeud B évolué selon la revendication 11 ou 12, l'unité d'interaction étant en outre configurée pour : recevoir un rapport de mesure renvoyé par l'UE ; déterminer, en fonction du rapport de mesure, de ne pas exécuter la commutation du réseau LTE au domaine CS du réseau 2G ou 3G ; et envoyer le second paramètre de C-DRX à l'UE ; ou
l'unité d'interaction étant en outre configurée pour : recevoir un rapport de mesure renvoyé par l'UE, envoyer un message requis de commutation à une entité de gestion de mobilité, MME, pour déclencher un processus de la commutation du réseau LTE au domaine CS du réseau 2G ou 3G, déterminer que le processus de commutation échoue, et envoyer le second paramètre de C-DRX à l'UE.

14. Noeud B évolué selon l'une quelconque des revendications 9 à 13, le paramètre de configuration de mesure comprenant en outre des informations d'instruction utilisées pour donner l'instruction à l'UE d'arrêter d'envoyer des données de liaison montante.
